Europäisches Patentamt

European Patent Office

Office européen des brevets

(19)

(11) Publication number: **0 091 679**

**B1**

(12) **EUROPEAN PATENT SPECIFICATION**

(45) Date of publication of patent specification: **29.01.86**

(51) Int. Cl.⁴: **C 01 B 17/50, C 01 B 17/58**

(21) Application number: **83103462.4**

(22) Date of filing: **09.04.83**

(54) **Thermal decomposition of waste sulfuric acid.**

(30) Priority: **14.04.82 US 368173**

(43) Date of publication of application:
**19.10.83 Bulletin 83/42**

(45) Publication of the grant of the patent:
**29.01.86 Bulletin 86/05**

(84) Designated Contracting States:
**DE FR GB IT**

(56) References cited:
**FR-A-2 032 846**
**US-A-2 110 267**
**US-A-2 406 890**
**US-A-2 417 386**
**US-A-2 789 035**
**US-A-4 256 721**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Eros, Donald Anthony**
**18 Gray Bridge Drive**
**Wilmington Delaware 19810 (US)**
Inventor: **Trollope, Gregory Anthony Raymond**
**466 Caswallen Drive**
**West Chester Pennsylvania 19380 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

This invention relates to the thermal decomposition of waste sulfuric acid streams. More particularly the invention relates to a method of substantial versatility that is useful in the production of sulfur dioxide from the controlled thermal decomposition of waste sulfuric acid streams having a wide variety of concentration and impurities.

Background of the invention

In the high temperature decomposition of waste sulfuric acid, it has been known for many years that waste acid may be decomposed or dissociated at high temperatures, i.e., at temperatures of the order of 1700—2200°F, (927° to 1204° Celsius) to yield sulfur dioxide, water and carbon dioxide.

The decompositions of the acid may be effected by pumping the acid at high pressure through suitable dispersing devices to atomize the acid which is then burned i.e, thermally decomposed. Various methods involving such thermal decomposition have been attempted to dispose of and/or utilize waste sulfuric acid with varying success. No method is known, however, which has the versatility that permits the processing, in an essentially continuous operation, of available waste sulfuric acid streams having virtually an unlimited concentration and impurity content.

The decomposition of the waste sulfuric acid is complicated not only by the wide range of concentrations of acid in these waste streams but, also, by the wide variety of contaminants in the acid. The largest single impurity is carbon which while at times it is advantageous because of its heat content, at other times the high carbon content requires a large volume of air for combustion. This dilutes the gas with respect to sulfur dioxide and detracts from the capability of the entire acid plant.

One prior art patent, U.S. Patent 4,256,721 describes the direct combustion in a burner of atomized sulfuric acid. The combustion is aided by a secondary source of oxygen containing air. However, because the sulfuric acid is itself the fuel in the system of U.S. Patent 4,256,721, this restricts the method to the use of waste sulfuric acid in which the acid content must be relatively high, typically, 55 to 97% by weight of sulfuric acid and from about 1 to 20% by weight of hydrocarbons. Also, because that patent deals with the direct combustion of the sulfuric acid in the burner, if the combustible content of the acid being fed is low, the acid stream must be supplemented by adding fuel to the waste acid before it is fed to the burner. This introduces a problem of adjustments in or pretreatment of the waste acid stream to attain a waste acid feed which is per se combustible.

Generally, in thermal decompositions of this kind, heat to reach the required decomposition temperatures to combust the waste sulfuric acid stream, may be supplied by burning hydrocarbon fuels or a suitably high source of sulfur such as hydrogen sulfide gas or molten sulfur. Sulfur is the most expensive of the raw materials used and consequently its efficient utilization and the provision of means that reduce the relative amounts used is warranted. The efficiency of the decomposition process is measured by the ratio of tons of waste acid decomposed per ton of sulfur burned. Another indication of efficiency is reflected in tons of virgin acid produced per day, and in tons of waste acid decomposed per day.

Because of the several materials involved in the processing of waste sulfuric acid, efficiency in the utilization directly of this waste product in the form in which it becomes available, especially in the more dilute concentrations, has been largely neglected. It is thus apparent that a need exists for an improved system for the recovery, and/or disposition, of waste sulfuric acid by a more efficient thermal decomposition method; such method affords means for substantially fully utilizing the combustible content of the sulfuric acid streams that are available in a wide range of sulfuric acid concentrations and which may include therein a variety of contaminants.

Summary of the invention

The process and apparatus of the present invention affords the capability of thermally decomposing waste streams of sulfuric acid using an oxygen containing gas as the dispersant for the liquid acid and wherein the oxygen content varies widely depending on the waste acid content and the fuel composition. The combustion with compressed air alone is frequently impractical due to the acid stream composition, e.g. because of the dilute concentration or because the nature and/or content of impurities. By coupling the use of oxygen into the acid to be decomposed, at such levels of oxygen as are needed, the system permits uninterrupted burning of relatively larger amounts of even those weaker given acid streams thereby proportionately increasing the sulfur values derived.

In the process of the invention, oxygen in either the liquid or gaseous state may be used. In the case of liquid oxygen, suitably supplied such as from a storage tank, it is passed through a control mechanism equipped with a vaporizer which converts the liquid oxygen to a gas, and the thus gasified oxygen is fed into the oxygen process line at a suitable positive pressure, e.g. preferably at a pressure greater than about 20 psig (1.38 bars). It will be apparent that oxygen may be supplied directly from an oxygen generating facility, thereby avoiding the need for separate oxygen transportation and storage arrangements. In the oxygen gas process line the oxygen passes preferably through suitable monitoring and control devices, e.g. a ball valve, a flow meter, a globe valve, a solenoid valve and a check valve before entering the acid spray nozzle. In the spray nozzle the oxygen flows under pressure through an annular space in the mixer-nozzle and escapes through a series of holes at the tip of the nozzle.

At the same time, the waste sulfuric acid introduced into the mixer-nozzle flows through the center of the nozzle also at a suitable positive pressure, e.g. preferably at a pressure less than about 50 psig (3.45 bars). As the acid leaves the nozzle it is struck by an array of converging jets of oxygen formed as the gas flows through the escape holes at the tip of the nozzle. The collision, i.e. admixture, of the oxygen containing gas streams converging into the waste acid stream outside and in front of the tip of the nozzle causes the stream of acid to shear and widely disperse and form into small droplets. The size of the droplets is controlled by the relative ratio and pressure of the oxygen containing gas fed to the nozzle used to effect the spray or dispersion and of the waste acid stream. The spray droplets formed in this manner are found to be substantially smaller and more readily conducive to combustion than are droplets formed by pressure atomization. The flow rate of waste acid is controlled by the acid line pressure.

The system of the invention affords at least the following advantages:

a. The quantity of required combustion gases fed to the system will be less; this results in less inert gases, such as nitrogen, being carried through the process.

b. The size of the waste acid droplets produced by converging oxygen containing gas jets on the liquid stream are smaller than the droplets produced by pressure atomization; this results in more efficient and faster decomposition of the waste acid.

c. The combustion of the fuel used, e.g. sulfur, hydrogen sulfide, hydrocarbon fuels, or a combination thereof, with the oxygen containing gas dispersed waste acid stream, results in higher temperatures which in turn permit higher waste acid flow rates, i.e. permits the combustion of relatively larger quantities of a waste sulfuric acid stream having a given acid concentration.

d. Increased efficiency that will produce a more favorable ratio of tons of waste acid decomposed per ton of fuel burned. For example, when sulfur is burned as fuel to provide appropriate combustion, substantially less sulfur is required by use of the controlled amounts of oxygen.

e. The tons of sulfur dioxide product, and virgin acid produced therefrom, per unit of time for a given burner is increased.

f. The relatively high pressure acid pumps, and other expensive maintenance items, may be eliminated in favor of more conventional replacements.

Various additional advantages of the system of the invention will become apparent from the following description and accompanying drawing.

Brief description of the drawing

Figure 1 is a flow diagram, showing largely schematically, of the system of the invention for the thermal decomposition of waste sulfuric acid streams wherein the acid stream dispersed with the oxygen containing gas jets is introduced as a dispersed phase into a boiler combustion chamber at a location in the burner contiguous to the burner flame.

Figure 2 illustrates a suitable stream coupling mixer-nozzle arrangements whereby the acid stream and the oxygen containing gas stream, both under positive pressure, are dispersed as a mixture into the burner.

Figures 3, 3A and 3B illustrate, respectively, the rear view, or fluid entry side, the side view and the top view of the nozzle end of a suitable mixer-nozzle.

Detailed description of the invention

The process of the invention in which a waste sulfuric acid stream is dispersed with an oxygen containing gas and decomposed in the combustion chamber of a boiler or furnace contiguous to the flame includes the steps of:

(a) feeding a stream of the waste sulfuric acid into a mixer which is adapted to receive and intimately admix and disperse at least one liquid stream and at least one gaseous stream and which under pressure disperses and admixes said streams through a nozzle, said nozzle containing at least one relatively centrally situated opening for at least the liquid sulfuric acid and a plurality of peripheral openings for the gas and wherein said acid stream is introduced into said mixer at pressures greater than atmospheric and exits said nozzle through said at least one central opening;

(b) feeding a gaseous stream containing oxygen into said mixer and wherein said oxygen under pressure greater than atmospheric exits the nozzle of said mixer in a gaseous form through the peripheral openings in said nozzle, simultaneously with said acid stream that exists through said at least one central opening whereby said sulfuric acid and oxygen containing streams are intimately interspersed to form a substantially homogeneous finely particulated mixture;

(c) controlling the relative pressure and volume of the waste acid stream, and the oxygen content and pressure of the gas stream, entering the mixer so that the oxygen content in the finely particulated mixture is sufficient to oxidize the impurities present;

(d) feeding the finely particulated liquid and gaseous mixture formed by and leaving the nozzle, into a furnace reactor contiguous to the furnace burner flame and wherein the mixture supplements the combustion in the burner and the waste acid is thermally decomposed to yield sulfur dioxide, carbon dioxide and water; and

(e) separating and recovering the thermal decomposition products of step (d).

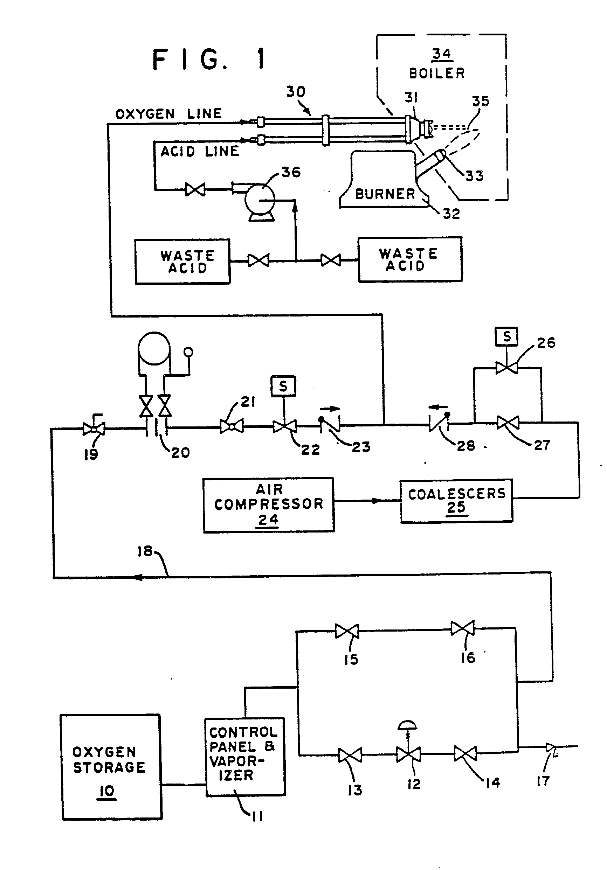

Referring to Figure 1 of the drawing, oxygen in either the liquid or gaseous state is supplied to the waste acid system. As shown, oxygen in liquid form from tank 10 is passed through a control zone 11 containing a vaporizer which converts the liquid oxygen to a gas. The gas is fed into the oxygen process line 18 at a positive pressure, preferably at a pressure greater than 20 psig (1.38 bars) through a pressure regulation system which may include a pressure regulator valve 12 and two isolating valves 13 and 14. Manual control is possible by opening block valve 15 and regulating the flow with valve 16. Excess pressure in the process line is prevented by pop off regulator 17. In the process line the oxygen passes through a ball valve, 19, a flow meter, 20, a globe valve, 21, a solenoid valve, 22, and a check valve, 23, before entering the acid spray mixing device 30.

The control system of the burner 32 is preferably provided with a number of interlocks to prevent operation of the boiler (shown generally by broken line 34), and of the burner 32, i.e., to effect a shut down of the system, under hazardous or undesirable circumstances. When this system trips due to any adverse conditions, selenoid valve 22 closes to cut off the oxygen containing gas supply. At such times, the acid pump 36 is also disabled. In normal operation both these streams, i.e. the acid and oxygen gas streams, effectively provide cooling to prevent damage to the nozzle from the high temperatures of the boiler or furnace 34. In the tripped condition this cooling is provided by an air compressor system consisting of an oil free air compressor 24, water coalescers 25, solenoid valve 26 and bypass 27, and check valve 28.

The advantages of the invention are provided by the manner in which the acid liquid stream is dispersed by the gaseous stream, as well as by the capability of varying the oxygen content of the oxygen containing gas. The dispersion of the liquid acid is effected by ejecting the stream of acid through a central or radially inwardly positioned opening in the nozzle which is surrounded by a plurality of peripherally located gas jet openings in the nozzle. While the invention is described by reference to a single liquid waste acid stream being ejected under positive pressure from the relatively central or radially interiorly disposed opening in the nozzle, it will be apparent that the waste acid stream may be coupled with another liquid stream, i.e., with a different acid stream or a liquid stream other than an acid which is not incompatible with the acid stream in the combustion operation and which is emitted from a second centrally located opening contiguous to the acid stream opening in the nozzle.

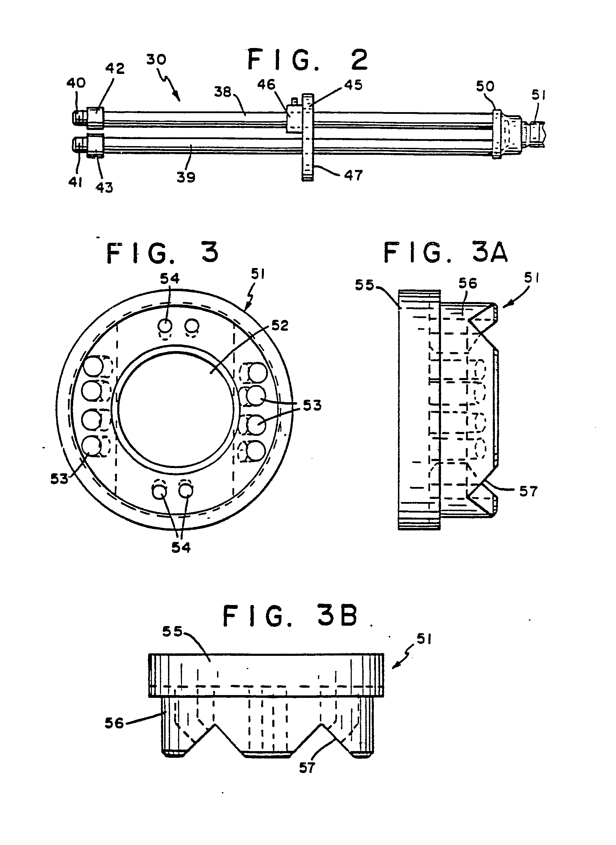

Additionally, while the gas jet peripheral openings are described with reference to the oxygen containing gas, other gases may be used in conjunction with the oxygen containing gas using one or more of the holes shown in Figure 3 of the drawing or through another array (not shown) of holes concentrically disposed in the nozzle around the relatively centrally located opening(s) through which the liquid stream or streams are ejected. The disposition of the gas jet openings formed in the nozzle is such that the liquid stream is struck downstream of the nozzle tip by converting jets of gas emitted from the peripherally located holes. Suitable nozzles of this kind, in which a plurality of peripheral gas streams converge on a liquid stream disposed within the peripheral gas streams are available, for example, from Spraying Systems Company of Wheaton, Illinois.

In the drawing, a suitable coupling or mixing apparatus for the liquid acid stream and the oxygen containing gas stream to produce the desired mixture, is illustrated in Figures 2 and 3. As shown by reference to Figure 2 the liquid and gas streams coupling device 30 comprises a pair of parallel contiguously mounted tubes or pipes, one of which admits the liquid sulfuric acid waste stream and the other of which admits in co-directional flow the gaseous oxygen containing gas coupled to a compressed air source. For convenience the two pipes, 38 and 39, are shown disposed relatively horizontally, one above the other, and the upper pipe 38 designated as the oxygen/compressed air pipe and the lower pipe 39 as the waste acid pipe. The mixer-nozzle pipes 38 and 39 are provided with suitable connectors 42 and 43, respectively, to secure the gas and liquid feed lines (not shown) to the pipe inlets 40 and 41 respectively. A mounting flange 45 is shown which may be adjustable longitudinally along the pipes and secured by a means 46 to hold the flange at the desired position on the pipes. The flange 45 is secured to the furnace 34 and such as by bolts (not shown) through openings 47 in the flange 45. The pipes 38 and 39, at the right of the flange 45 extend into the furnace 34 a suitable distance to provide optimum combustion and at a location so that the mixture exiting the nozzle 51 is preferably at a point forward of and contiguous to the flame generated by the tip 33 of the burner 32 in the combustion zone of the furnace or boiler 34.

The nozzle 51 of the mixer 30, shown in greater detail in Figures 3—3B, is secured to the dual pipes 38 and 39 by an adapter 50 which feeds the two streams into the nozzle 51. In the nozzle 51 the liquid acid stream under pressure exits through a central opening in the nozzle. The oxygen/compressed air in gaseous form passes into a peripheral annual chamber in nozzle 51 and exits from a plurality of holes 53 at the sides and holes 54 at the top and bottom of the nozzle 51. The nozzle 51 comprises a base mounting or plenum portion 55 and a face position 56.

The face portion 56 of the nozzle 51 is conveniently formed so as to have a substantially annular, V-shaped, outwardly facing groove. The several gas feed openings 53 and 54 formed in the face of nozzle 51 are disposed so that the gas stream exiting the nozzle 51 from the several openings 53 and 54 is projected in a converting mode into the liquid gas stream at a point downstream contiguous to the front of nozzle 51. At least some of the openings 53 and 54 are preferably formed so that they are disposed to project the gas stream to the center at an angle which is substantially normal, i.e. at an approximately 90 degree angle, to the outer face of the V-shaped grove 57 and approximately a 45 degree angle to the fact of the nozzle 51, to project a converging stream of oxygen containing gas into the liquid stream leaving the nozzle interiorly of the gas streams.

In operation, the oxygen under suitable pressure flows through holes at the tip of the nozzle 51 (Figure 3). Meanwhile, the waste sulfuric acid flows through the center 52 of the spray nozzle 51 at a suitable positive pressure. As the acid leaves the nozzle 51 it is struck by jets of the oxygen containing gas as the gas flows through the inwardly angled escape holes 53 and 54 at the tip of the nozzle 51. The collision of the waste acid stream with the oxygen jet streams outside and downstream of the tip of the nozzle causes the stream of acid to shear and form into small droplets whose size may be controlled by several factors including, the velocity of the jets, the oxygen pressure to the spray nozzle, the direction and shape of the gas jets, and the like. Droplets generated in this manner are formed so that they are preferably substantially smaller than droplets formed by pressure atomization. The point where the waste acid stream combines with the gas jets exiting the nozzle 51, to provide the intimate mixture of waste acid and dispersing/combustion gas, is preferably located ahead of or downstream of the flame generated at the tip 33 of burner 32 and contiguous to the burner flame. The waste acid dispersion is preferably directed so as to intersect the burner flame, as indicated at 35 in Figure 1, at a relatively slight angle rather than to parallel the burner flame. The waste acid flow rate is suitably controlled by the acid line pressure.

## Claims

1. A process for the thermal decomposition of waste aqueous sulfuric acid with a gaseous stream comprised essentially of oxygen containing gas which comprises:

(a) feeding a stream of the waste sulfuric acid into a mixer 30 which is adapted to receive and intimately admix and disperse at least one liquid stream and at least one gaseous stream and which under pressure disperses and admixes said streams through a nozzle 31, said nozzle containing at least one relatively centrally situated opening 52 for at least the liquid sulfuric acid and a plurality of peripheral openings 53 and 54 for the gas and wherein said acid stream is introduced into said mixer at pressures greater than atmospheric and exits said nozzle through said at least one central opening;

(b) feeding a gaseous stream containing oxygen into said mixer and wherein said oxygen under pressures greater than atmospheric exits the nozzle of said mixer in a gaseous form through the peripheral openings in said nozzle, simultaneously with said acid stream exiting through said at least one central opening whereby said sulfuric acid and oxygen containing streams are intimately interspersed to form a substantially homogeneous finely particulated mixture;

(c) controlling the relative pressure and volume of the acid stream, and the oxygen content and pressure of the gas stream, entering the mixer so that the waste acid particle size and the oxygen content in the finely particulated mixture is sufficient to oxidize the impurities present;

(d) feeding said finely particulated liquid and gaseous mixture leaving exiting said nozzle into a furnace reactor contiguous to the furnace burner flame wherein the mixture supplements the combustion and is thermally decomposed to yield sulfur dioxide, carbon dioxide and water; and

(e) separating and recovering the thermal decomposition reaction products of step (d).

2. The process of claim 1 wherein the oxygen concentration in said gaseous stream fed into said mixer in step (b) is proportionally increased as the concentration of acid values in said liquid stream is reduced.

3. The process of claim 1 wherein at least some of the oxygen containing gaseous streams fed into said mixer in step (b) are projected into the liquid stream exiting from said nozzle to converge therewith at a substantially 45° angle.

4. The process of claim 1 wherein the oxygen containing gas contains at least 40 percent oxygen.

5. The process of claim 1 wherein the oxygen containing gas contains at least 90 percent oxygen.

6. The process of claim 1 wherein the acid stream is introduced into the mixer in step (a) at pressures not exceeding about 3.45 bar (50 psig).

7. The process of claim 1 wherein the oxygen containing gas is introduced to the mixer in step (b) under a pressure of at least 1.38 bar (20 psig).

## Patentansprüche

1. Verfahren zum thermischen Zersetzen von wäßriger Abfallschwefelsäure mit einem Gasstrom, der im wesentlichen aus einem sauerstoffhaltigen Gas besteht, in dem

(a) ein Strom der Abfallschwefelsäure in einen Mischer 30 eingeleitet wird, der geeignet ist, mindestens einen Flüssigkeitsstrom und mindestens einen Gasstrom zu empfangen und sie innig miteinander zu vermischen und zu dispergieren und der die genannten Ströme beim Durchtritt durch eine Düse 31 unter Druck dispergiert und vermischt, wobei die Düse mindestens eine relativ zentral angeordnete Öffnung 52 für mindestens die flüssige Schwefelsäure und eine Mehrzahl von umfangsnahen Öffnungen 53 für das Gas enthält, und der Säurestrom in den Mischer unter einem Überdruck eingeleitet wird und durch die mindestens eine zentrale Öffnung aus der Düse austritt;

(b) ein sauerstoffhaltiger Gasstrom in den Mischer eingeleitet und der Sauerstoff in Gasform unter einem Überdruck aus der Düse des Mischers durch deren umfangsnahe Öffnungen austritt, und zwar gleichzeitig mit dem Austritt des Säurestroms durch die mindestens eine zentrale Öffnung, so daß der Schwefelsäurestrom und der sauerstoffhaltige Strom innig miteinander vermischt werden und sie ein im wesentlichen homogenes feinteiliges Gemisch bilden;

(c) der Druck und das Volumen des Säurestroms und der Sauerstoffgehalt und der Druck des Gasstroms, die in den Mischer eintreten, relativ zueinander so gesteuert werden, daß in dem feinteiligen Gemisch eine solche Teilchengröße der Abfallsäure und ein solcher Sauerstoffgehalt vorhanden sind, daß die vorhandenen Verunreinigungen oxidiert werden;

(d) das aus der Düre ausgetretene Gemisch von feinteiliger Flüssigkeit und Gas einem Ofenreaktor derart zugeführt und mit der Brennerflamme des Ofens in Berührung gebracht wird, so daß das Gemisch die Verbrennung unterstützt und unter Bildung von Schwefeldioxid, Kohlendioxid und Wasser thermisch zersetzt wird; und

(e) die durch die thermische Zersetzung im Schritt (d) erhaltenen Reaktionsprodukte voneinander getrennt und gewonnen werden.

2. Verfahren nach Anspruch 1, dadurch gekennzeichnet, daß die Sauerstoffkonzentration in dem in den Mischer eingeleiteten Gasstrom bei einer Verringerung der Säurekonzentration in dem Flüssigkeitsstrom proportional erhöht wird.

3. Verfahren nach Anspruch 1, dadurch gekennzeichnet, daß mindestens einige der im Schritt (b) in den Mischer eingeleiteten, sauerstoffhaltigen Gasströme derart in den aus der Düse austretenden Flüssigkeitsstrom geblasen werden, daß sie mit ihm unter einem Winkel von etwa 45° konvergieren.

4. Verfahren nach Anspruch 1, dadurch gekennzeichnet, daß das sauerstoffhaltige Gas mindestens 40% Sauerstoff enthält.

5. Verfahren nach Anspruch 1, dadurch gekennzeichnet, daß das sauerstoffhaltige Gas mindestens 90% Sauerstoff enthält.

6. Verfahren nach Anspruch 1, dadurch gekennzeichnet, daß im Schritt (a) der Säurestrom in den Mischer unter einem Druck von höchstens etwa 3,45 bar eingeleitet wird.

7. Verfahren nach Anspruch 1, dadurch gekennzeichnet, daß im Schritt (b) das sauerstoffhaltige. Gas in den Mischer unter einem Druck von mindestens 1,38 bar eingeleitet wird.

**Revendications**

1. Un procédé de décomposition thermique d'acide sulfurique aqueux de déchet avec un jet gazeux composé essentiellement d'un gaz contenant de l'oxygène qui comprend:

(a) Alimenter avec un jet d'acide sulfurique de déchet un mélangeur 30 adapté pour recevoir, mélanger intimement et disperser au moins un jet liquide et au moins un jet gazeux et qui, sous pression, disperse et mélange lesdits jets à travers un diffuseur 31, ledit diffuseur contenant au moins une ouverture 52 de position relativement centrée pour au moins l'acide sulfurique liquide et une pluralité d'ouvertures périphériques 53 et 54 pour le gaz, et dans lequel ledit jet d'acide est introduit dans ledit mélangeur à des pressions supérieures à la pression atmosphérique et sort dudit diffuseur par au moins l'une desdites ouvertures centrales.

(b) Alimenter avec un jet gazeux contenant de l'oxygène ledit mélangeur et dans lequel ledit oxygène, sous des pressions supérieures à la pression atmosphérique, sort du diffuseur dudit mélangeur sous une forme gazeuse par les ouvertures périphériques dudit diffuseur, simultanément avec ledit jet d'acide sortant par au moins l'une desdites ouvertures centrales, ce par quoi lesdits jet d'acide sulfurique et jet contenant de l'oxygène sont intimement interdispersés pour former un mélange substantiellement homogène de particules fines;

(c) Contrôler la pression relative et le volume du jet d'acide, le taux d'oxygène et la pression du jet de gaz, entrant dans le mélangeur de façon à ce que la dimension des particules d'acide de déchet et le taux d'oxygène dans le mélange finement pulvérisé soient suffisants pour oxyder les impuretés présentes;

(d) Alimenter avec ledit liquide finement pulvérisé et le mélange gazeux quittant par la sortie ledit diffuseur un réacteur-four adjacent à la flamme du brûleur du four dans lequel le mélange contribuant à la combustion est décomposé thermiquement pour donner du dioxyde de soufre, du dioxyde de carbone et de l'eau;

(e) Séparer et récupérer les produits de la réaction de décomposition thermique de l'étape (d).

2. Le procédé de la revendication 1 dans lequel la concentration en oxygene dans jet gazeux alimentant ledit mélangeur à l'étape (b) est proportionellement augmenté alors que la concentration des valeurs d'acide dans ledit jet liquide est diminuée.

3. Le procédé de la revendication 1 dans lequel au moins certains desdits jets gazeux contenant de l'oxygène alimentant ledit mélangeur à l'étape (b) sont projetés sur le jet de liquide sortant dudit diffuseur pour converger avec lui selon un angle d'essentiellement 45°.

4. Le procédé de la revendication 1 dans lequel le taux d'oxygène dans le gaz contenant de l'oxygène est au moins égal à 40 pour cent.

5. Le procédé de la revendication 1 dans lequel le taux d'oxygène dans le gaz contenant de l'oxygène est au moins égal à 90 pour cent.

6. Le procédé de la revendication 1 dans lequel le jet d'acide est introduit dans le mélangeur à l'étape (a) à des pressions ne dépassant pas environ 3,45 bars (50 psig).

7. Le procédé de la revendication 1 dans lequel le gaz contenant de l'oxygène est introduit dans le mélangeur à l'étape (b) sous une pression d'au moins 1,38 bars (20 psig.).

F I G . 1

0 091 679

# FIG. 2

# FIG. 3

# FIG. 3A

# FIG. 3B

2